(19) Europäisches Patentamt
European Patent Office
Office européen des brevets

(11) EP 2 098 953 A1

(12) **EUROPÄISCHE PATENTANMELDUNG**

(43) Veröffentlichungstag:
09.09.2009 Patentblatt 2009/37

(51) Int Cl.:
*G06F 9/44* (2006.01)     *G06F 17/50* (2006.01)

(21) Anmeldenummer: 08004196.5

(22) Anmeldetag: 06.03.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(71) Anmelder: Continental Automotive GmbH
30165 Hannover (DE)

(72) Erfinder:
• Brüll, Martin, Dr.
  93092 Barbing (DE)
• Burger, Thomas
  93051 Regensburg (DE)
• Kunze, Marco, Dr.
  93083 Obertraubling (DE)

(54) **Verfahren zum Erstellen eines Rechnersimulationsmodells und Computerprogrammprodukt**

(57) Die Erfindung betrifft ein Verfahren zum Erstellen eines Rechnersimulationsmodells (30) einer zu simulierenden Funktionalität, aufweisend Bereitstellen eines einer Funktionalität einer Steuerung zugeordneten Rechenprogrammcodes (20), Unterteilen des Rechenprogrammcodes (20) in einzelne, die Funktionalität der Steuerung beschreibende Funktionen (21-23), Gliedern der Funktionen (21-23) derart, so dass ein aufrufhierar-chischer Aufrufplan der einzelnen Funktionen (21-23) entsteht, Nachbilden des aufruf-hierarchischen Ablaufplans in einem den Funktionen zugeordneten Funktionshüllen (31, 32) aufweisenden Modell, Übersetzen von den Funktionen (21-23) des aufruf-hierarchischen Aufrufplans zugeordneten Algorithmen in entsprechende Algorithmen des Rechensimulationsprogramms und Zuordnen der Algorithmen des Simulationsprogramms zu den Funktionshüllen (31, 32).

FIG. 3

EP 2 098 953 A1

**Beschreibung**

Die Erfindung betrifft ein Verfahren zum Erstellen eines Rechnersimulationsmodells und ein Computerprogrammprodukt.

Heutige Motorsteuerungen für Verbrennungsmotoren in Kraftfahrzeugen sind relativ komplex. Die Entwicklung der Funktionen für die Motorsteuerungen wird vermehrt mit einem modellbasierten Ansatz durchgeführt. Hierzu wird zunächst ein simulierbares Rechnermodell der Funktion erstellt und mit Hilfe von Simulationen verifiziert. In einem nächsten, bevorzugt automatischen Prozessschritt wird das Modell in den Programmcode einer Programmiersprache, z.B. C, übersetzt. Dieser Programmcode wird zusammen mit weiteren Programmcodes weiterer Funktionalitäten der Motorsteuerung kompiliert und in maschinenlesbarer Form ins Steuergerät der Motorsteuerung gebracht.

Der modellbasierte Entwicklungsprozess ("model based development", MBD) von Motorsteuerungen bietet Vorteile gegenüber anderen Entwicklungsprozessen, wie beispielsweise der direkten manuellen Erstellung eines C-Rechenprogrammcodes, da die zu entwickelnde Funktion simulierbar ist und mittels relativ einfach verständlicher, grafischer Spezifikation darstellbar ist. Dies steigert die Effizienz hinsichtlich der Umsetzung, Verifikation und Validierung auch relativ kleiner Modifikationen bereits bestehender Funktionalitäten.

Ein relativ großer Teil der Funktionen von Motorsteuerungen wurden jedoch nicht über den modellbasierten Entwicklungsprozess entwickelt, so dass diese Funktionalitäten zwar als Programmiercode einer Standard-Programmiersprache vorliegen, jedoch kein Rechnermodell vorhanden ist. Um daher ein grafischen Rechnermodell von der Funktionalität zu erhalten, muss dieses neu erstellt werden.

Die Aufgabe der vorliegenden Erfindung ist es daher, ein Verfahren zum Erstellen eines grafischen Rechnersimulationsmodells aus einem einer Funktionalität einer Steuerung zugeordneten Rechenprogrammcode anzugeben.

Die Aufgabe der Erfindung wird gelöst durch ein Verfahren zum Erstellen eines Rechnersimulationsmodells einer zu simulierenden Funktionalität, aufweisend folgende Verfahrensschritte:

- Bereitstellen eines einer Funktionalität einer Steuerung zugeordneten Rechenprogrammcodes,

- Unterteilen des Rechenprogrammcodes in einzelne, die Funktionalität der Steuerung beschreibende Funktionen,

- Gliedern der Funktionen derart, so dass ein aufruf-hierarchischer Aufrufplan der einzelnen Funktionen entsteht,

- Nachbilden des aufruf-hierarchischen Ablaufplans in einem den Funktionen zugeordneten Funktionshüllen aufweisenden Modell,

- Übersetzen von den Funktionen des aufruf-hierarchischen Aufrufplans zugeordneten Algorithmen in entsprechende Algorithmen des Rechensimulationsprogramms und

- Zuordnen der Algorithmen des Simulationsprogramms zu den Funktionshüllen.

Ein weitere Aspekt der Erfindung ist ein Computerprogrammprodukt, das direkt in den internen Speicher eines digitalen Computers geladen werden kann und Softwarecodeabschnitte umfasst, mit denen die Verfahrensschritte des erfindungsgemäßen Verfahrens ausgeführt werden, wenn das Produkt auf einem Computer läuft.

Gemäß dem erfindungsgemäßen Verfahren liegt der Rechenprogrammcode vor, der einer Funktionalität einer Steuerung zugeordnet ist. Der Rechenprogrammcode liegt insbesondere in einer Standard-Programmiersprache, wie z.B. C, Pascal oder Fortran 77 vor, und ist insbesondere dafür vorgesehen, in eine Steuerungsvorrichtung geladen zu werden, um die Steuerung zu realisieren. Eine Steuerung ist z.B. eine Motorsteuerung für einen Verbrennungsmotor eines Kraftfahrzeugs und der Rechenprogrammcode ist z.B. die Software oder Teil der Software, die eventuell mit Rechenprogrammcodes weiterer Funktionalitäten kompiliert und in maschinenlesbarer Form ins Steuergerät der Motorsteuerung gebracht wird. Der Begriff Steuerung soll in diesem Zusammenhang auch "Regelung" umfassen.

Um aus dem Rechenprogrammcode das grafische Rechnersimulationsmodell der Funktionalität der Steuerung zu erhalten, wird erfindungsgemäß der Rechenprogrammcode in einzelne, die Funktionalität der Steuerung beschreibende Funktionen unterteilt und gegebenenfalls die Funktionen derart gegliedert, so dass ein aufruf-hierarchischer Aufrufplan der einzelnen Funktionen entsteht. Somit entsteht ein Satz von Funktionen und der zugehöriger Aufrufplan (Scheduling).

Anschließend wird der aufruf-hierarchische Ablaufplan in einem den Funktionen zugeordneten Funktionshüllen aufweisenden Modell in der grafischen Simulationsumgebung nachgebildet. Das Modell umfasst die den Funktionen zugeordneten Funktionshüllen z.B. in Form von generischen Funktionsblöcken mit den Funktionen zugeordneten Ein- und Ausgängen und ohne den den Funktionen zugeordneten Algorithmen als solche.

Danach, gleichzeitig oder auch vor dem letzten erwähnten Verfahrensschritt werden die Funktionen des aufruf-hierarchischen Aufrufplans zugeordneten Algorithmen in entsprechende Algorithmen des Rechensimulationsprogramms übersetzt.

Die Algorithmen des Simulationsprogramms können dann den Funktionshüllen zugeordnet werden.

Liegt der Rechenprogrammcode z.B. in der Programmiersprache "C" vor, dann kann der aufruf-hierarchische Ablaufplan pro Zeile den Aufruf einer Funktion mit übergebenen Parametern umfassen. Er umfasst jedoch nicht ein Dateninterface, das über globale Variablen abgehandelt wird. Der einer Funktion zugeordnete Algorithmus des Rechenprogrammcodes wird insbesondere mit Hinblick auf die benötigten Eingangsdaten, wie z.B. Parameter oder globale Variablen, und alle erzeugten Ausgangsdaten, wie z.B. Rückgabewerte oder globale Variablen, analysiert. Diese Eingangsdaten stellen die Eingänge und die Ausgangsdaten stellen die Ausgangsdaten der entsprechenden Funktionshülle im Modell dar.

Der aufruf-hierarchische Aufrufplan stellt also die reine Ausführungsreihenfolge von Funktionen dar. Die Funktionshüllen spiegeln das Funktionsinterface wieder und sind z.B. bei Verwendung von Simulink Subsysteme mit Ein- und Ausgängen.

In einem weiteren Verfahrensschritt können diejenigen Funktionen des Rechenprogrammcodes ermittelt werden, deren zugeordnete Algorithmen direkt in der grafischen Simulationsumgebung des Rechensimulationsprogramms darstellbar sind. Dieser Schritt kann unabhängig vom Nachbilden des grafischen Ablaufplans erfolgen. Insbesondere können die Algorithmen des Rechenprogrammcodes, die im Rechensimulationsprogramm darstellbar sind, in entsprechende Algorithmen des Rechensimulationsprogramms übersetzt werden.

Es können dann auch von den Algorithmen des Rechenprogrammcode, die im Rechensimulationsprogramm darstellbar sind, entsprechende grafische Darstellungen im grafischen Rechnersimulationsmodell erstellt werden. Aufgrund dieses Schrittes können die Funktionshüllen durch Funktionsblöcke der Simulationsumgebung ersetzt oder erweitert werden, denen bereits eine vorab festgelegte mathematische Beziehung zugeordnet ist.

Für das Ermitteln derjenigen Funktionen des Rechenprogrammcodes, deren zugeordnete Algorithmen direkt in der grafischen Simulationsumgebung des Rechensimulationsprogramms darstellbar sind, wird nach einer Ausführungsform des erfindungsgemäßen Verfahrens ein Wörterbuch verwendet, mittels dessen einzelne mathematische Ausdrücke, Codemuster mit spezifischen Platzhaltern und/oder ganze Algorithmen von der Syntax des Rechenprogrammcodes in die Syntax des Rechensimulationsprogramms übersetzt wird.

Algorithmen des Rechenprogrammcodes, die im Rechensimulationsprogramm nicht darstellbar sind, können als Restcode im Rechensimulationsprogramm bzw. in der grafischen Simulationsumgebung an entsprechenden Stellen, beispielsweise in einem Textfeld, abgelegt werden. Dieser Teil kann vorgesehen sein, um später von einem Anwender manuell bearbeitet zu werden. Wenn möglich, kann der Restcode statt in einem Textfeld in einem ausführbaren Funktionsblock, d.h. als eine im Rechnersimulationsmodell eingebettete und ausführbare Codesequenz des Simulationsprogramms bzw. der grafischen Simulationsumgebung im Rechnersimulationsmodell eingebaut werden (z.B. als Simulink S-Funktion).

Ein Ausführungsbeispiel der Erfindung ist beispielhaft in den schematischen Zeichnungen dargestellt. Es zeigen:

Fig. 1     einen Rechner,

Fig. 2     einen Rechenprogrammcode,

Fig. 3     eine grafische Simulationsumgebung und

Fig. 4     ein Flussdiagramm.

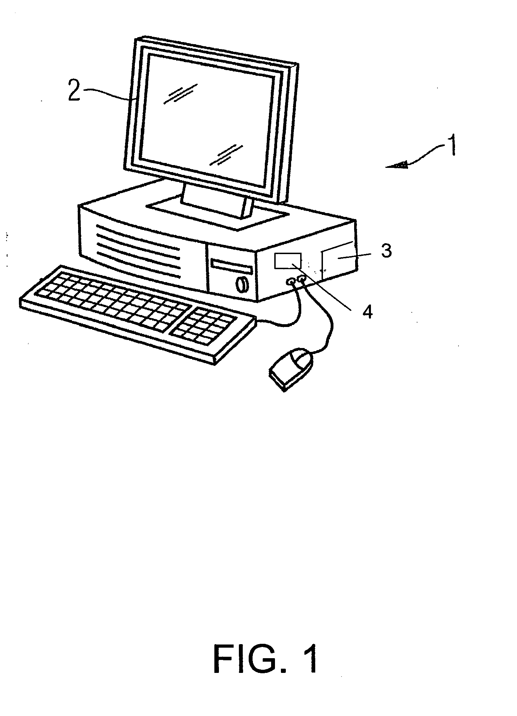

Die Fig. 1 zeigt einen Rechner 1 mit einem internen Speicher 3, auf dem im Falle des vorliegenden Ausführungsbeispiels ein Simulationsprogramm zum Simulieren von u.A. Regel- und Steuerungen installiert ist. Auf dem Rechner 1 ist ferner eine grafische Simulationsumgebung in Form eines Rechnerprogramms installiert. Die grafischen Simulationsumgebung ist ein grafischer Editor, mit dem eine grafische Darstellung für die zu simulierende Regelung oder Steuerung mittels Funktionsblöcken verschiedener Blocktypen erstellt, auf dem Bildschirm 2 des Rechners 1 angezeigt und mit einem nicht dargestellten Drucker ausgedruckt werden kann. Das Simulationsprogramm kann die der graphischen Darstellung zugeordnete Regelung oder Steuerung simulieren.

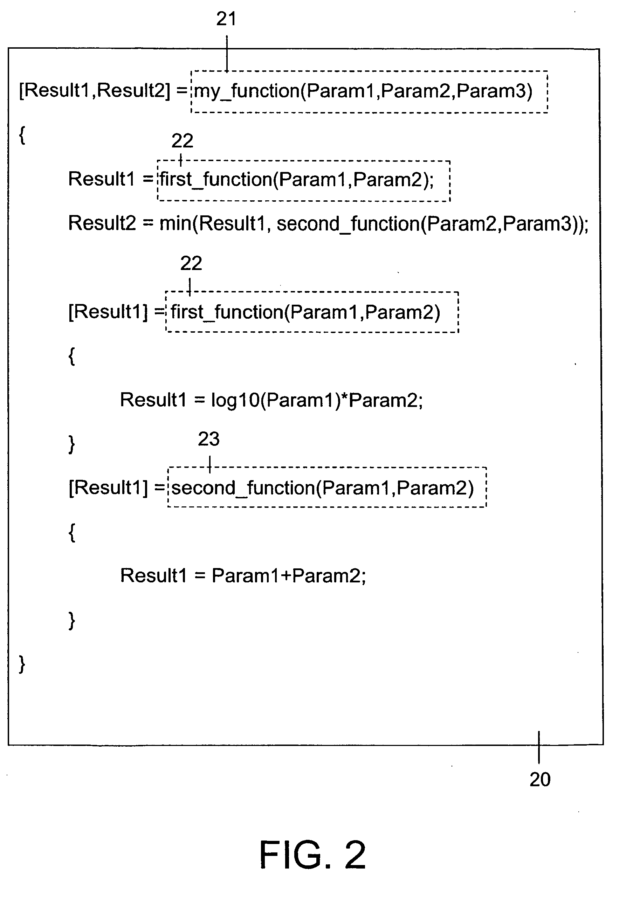

Auf dem Rechner 1 ist außerdem ein in der Fig. 2 gezeigter Rechenprogrammcode 20 gespeichert, der einer Regelung oder Steuerung oder zumindest einen Teil dieser Regelung/ Steuerung beschreibt und dafür vorgesehen ist, auf ein nicht näher gezeigtes Steuergerät z.B. für einen Verbrennungsmotor eines Kraftfahrzeugs geladen zu werden. Der Rechenprogrammcode 20 ist in einer Standard-Programmiersprache, z.B. C, FORTRAN 77 oder Pascal geschrieben.

Im Falle des vorliegenden Ausführungsbeispiels liegt der Rechenprogrammcode 20 in einer Pseudo-Programmiersprache vor und umfasst eine Hauptfunktion 21 ("my_function"), der eine erste Unterfunktion 22 ("first_function") und eine zweite Unterfunktion 23 ("second_function") zugeordnet sind.

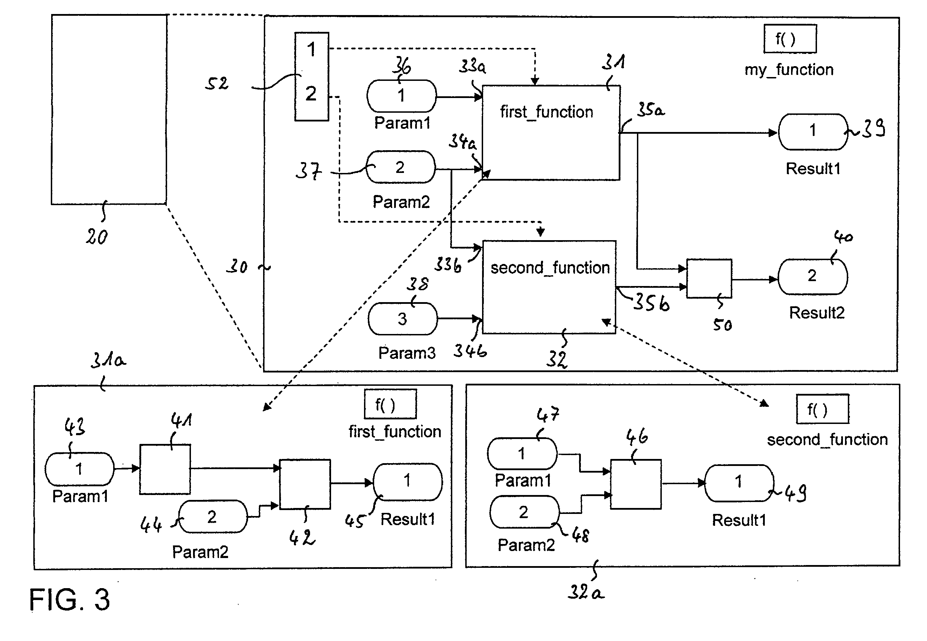

Im Falle des vorliegenden Ausführungsbeispiels läuft auf dem Rechner 1 ferner ein Rechenprogramm, das in den internen Speicher 3 des Rechners 1 geladen wurde und automatisch aus dem Rechenprogrammcode 20 mittels eines Sequenzers 52 eine in der Fig. 3 gezeigte grafische Darstellung 30 der Regelung/ Steuerung (Funktionalität) erstellt, die mittels der grafischen Simulationsumgebung auf dem Bildschirm 2 dargestellt werden kann. Die grafische Darstellung 30 stellt ein der Simulationsumgebung zugeordnetes Rechnersimulationsmodell der Regelung bzw. Steuerung dar.

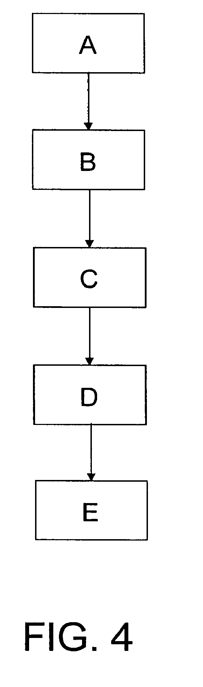

Im Falle des vorliegenden Ausführungsbeispiels wird die grafische Darstellung 30, d.h. das Rechnersimulationsmodell, folgendermaßen aus dem Rechenprogrammcode 20 erstellt. Die einzelnen Schritte für dieses Erstellen sind in der Fig. 4 zusammengefasst.

Zunächst wird der obengenannte Rechenprogrammcode 20 im Rechner 1 geladen, Schritt A des Flussdiagramms.

Anschließend unterteilt das für das Erstellen der grafischen Darstellung 30 (Rechnersimulationsmodell) vorgesehene und auf dem Rechner 1 laufende Rechenprogramm den Rechenprogrammcode 20 in seine einzelnen Funktionen 21-23, Schritt B des Flussdiagramms. Sind die einzelnen Funktionen 21-23 noch nicht hierarchisch aufgeteilt, wie dies im Falle des vorliegenden Ausführungsbeispiels bereits der Fall ist, dann teilt das Rechenprogramm automatisch den Rechenprogrammcode 20 in seine Funktionen 21-23 hierarchisch auf, Schritt C des Flussdiagramms. Somit ist es möglich, den Rechenprogrammcode 20 von oben nach unten mit einer entsprechenden Aufrufreihenfolge der beiden Unterfunktionen 22, 23 abzuarbeiten.

Aufgrund der Aufrufreihenfolge der beiden Unterfunktionen 22, 23 erstellt daraufhin automatisch das Rechenprogramm die in der Fig. 3 dargestellte grafische Darstellung 30, die die erste Unterfunktion 22 mittels einer Funktionshülle 31 und die zweite Unterfunktion 23 mittels einer Funktionshülle 32 wiedergibt (simuliert), Schritt D des Flussdiagramms. Handelt es sich bei der grafischen Simulationsumgebung beispielsweise um "Simulink", dann können die Funktionshüllen 31, 32 als durch die Funktionalität "Function-Call" getriggerte Subsysteme dargestellt werden.

Im Falle des vorliegenden Ausführungsbeispiels berechnet jede der beiden Unterfunktionen 22, 23 unter Zuhilfenahme einer mathematischen Berechnung (Algorithmus) jeweils aus zwei Parametern einen Ausgangswert. Somit weist jeder der beiden Funktionshüllen 31, 32 jeweils zwei Dateneingänge 33a, 34a, 33b, 34b und jeweils einen Datenausgang 35a, 35b auf. Die Werte der Datenausgänge 35a, 35b berechnen sich aufgrund der mathematischen Beziehungen der beiden Unterfunktionen 22, 23 des Rechenprogrammcodes 20.

Des Weiteren ergibt sich aus der Hauptfunktion 21, dass diese insgesamt drei Parameter (Param1, Param2, Param3) verarbeitet, die im Falle des vorliegenden Ausführungsbeispiels als Funktionsblöcke 36-38 des Typs "Eingang" für die grafische Darstellung 30 nachgebildet werden, die entsprechend mit den Dateneingänge 33a, 34a, 33b, 34b der beiden Funktionsblöcke 31, 32 verbunden werden. Außerdem ergibt sich aus der Hauptfunktion 21, dass diese zwei Ergebnisse liefert, weshalb das Rechenprogramm automatisch zwei Funktionsblöcke 39, 40 des Typs "Ausgang" für die grafische Darstellung nachgebildet. Aufgrund der durch die Funktionen 21-23 festgelegten Ein- und Ausgangsbeziehungen veranlasst das Rechenprogramm, dass die Funktionsblöcke 36-38 des Typs "Eingang" entsprechend der Unterfunktionen 22, 23 mit den Eingängen 33a, 34a, 33b, 33b der beiden Funktionshüllen 31, 32 verbunden werden.

Um die Funktionen 21-23 in der grafischen Simulationsumgebung genauer darstellen zu können, ist im Falle des vorliegenden Ausführungsbeispiels im Rechner 1 ein elektronisches Wörterbuch 4 gespeichert, das zu einzelnen mathematischen Ausdrücken, Codemustern mit spezifischen Platzhaltern oder ganzen Algorithmen der Programmiersprache, in der der Rechenprogrammcode 20 geschrieben ist, die entsprechende Syntax des Rechensimulationsprogramms angibt. Somit ist es u.A. dem Rechenprogramm möglich zu ermitteln, ob die beiden Unterfunktionen 22, 23 direkt im Simulationsprogramm und somit mittels der grafischen Simulationsumgebung dargestellt werden können.

Im Falle des vorliegenden Ausführungsbeispiels entspricht die erste Unterfunktion 22 der folgenden mathematischen Beziehung:

$$f_1(x, y) = (\log_{10}(x))*y$$

Somit berechnet die erste Unterfunktion 22 zunächst den Zehnerlogarithmus vom Wert x und multipliziert das daraus entstehende Resultat mit dem Wert $y$. Die erste Unterfunktion 22 umfasst demnach die beiden mathematischen Ausdrücke bzw. Beziehungen "Zehnerlogarithmus" und "Produkt", denen im Falle des vorliegenden Ausführungsbeispiels Funktionsblöcke 41 und 42 vom Typ "Zehnerlogarithmus" und "Produkt" der grafischen Simulationsumgebung zugeordnet sind, was das Rechenprogramm aufgrund des Wörterbuches 4 erkennt, Schritt E des Flussdiagramms. Somit ist es dem Rechenprogramm möglich, automatisch den der ersten Unterfunktion 22 zugeordneten Funktionshülle 31 mittels einer grafischen Darstellung 31a darzustellen. Diese umfasst neben den Funktionsblöcken 41, 42 der Typen "Zehnerlogarithmus" und "Produkt", einen mit dem Eingang des Funktionsblocks 41 des Typs "Zehnerlogarithmus" verbundenen Funktionsblock 43 vom Typ "Eingang" und einen mit dem Eingang des Funktionsblocks 42 des Typs "Produkt" verbundenen Funktionsblock 44 vom Typ "Eingang". Außerdem ist der Ausgang des Funktionsblocks 41 des Typs "Zehnerlogarithmus" mit einem weiteren Eingangs des Funktionsblocks 42 des Typs "Produkt" verbunden. Der Ausgang des Funktionsblocks 42 des Typs "Produkt" ist mit einem Funktionsblock 45 vom Typ "Ausgang" verbunden. Alternativ ist es auch möglich, die Funktionshülle 31 durch die Funktionsblöcke 41, 42 zu ersetzen.

Im Falle des vorliegenden Ausführungsbeispiels entspricht die zweite Unterfunktion 23 der folgenden mathematischen Beziehung:

$$f_2(x, y) = x + y$$

Somit berechnet die zweite Unterfunktion 23 die Summe von *x* und *y*, weist also den mathematischen Ausdruck "Summe" auf. Dem mathematischen Ausdruck "Summe" ist gemäß dem Wörterbuch 4 ein Funktionsblock 46 vom Typ "Summe" zugeordnet, so dass die zweite Unterfunktion 23 mittels einer grafischen Darstellung 32a in der grafischen Simulationsumgebung darstellbar ist. Die der zweiten Unterfunktion 23 zugeordnete grafische Darstellung 32a umfasst ferner zwei Funktionsblöcke 47, 48 vom Typ "Eingang", die mit den Eingängen des Funktionsblocks 46 vom Typ "Summe" verbunden sind, und einen Funktionsblock 49 vom Typ "Ausgang, der mit dem Ausgang des Funktionsblocks 46 vom Typ "Summe" verbunden ist. Alternativ kann die der zweiten Unterfunktion 23 zugeordnete Funktionshülle 32 auch durch den Funktionsblock 46 der grafischen Darstellung 32a ersetzt werden.

Im Falle des vorliegenden Ausführungsbeispiels berechnet die Hauptfunktion 21 aus den drei Parametern Param1, Param2 und Param3 zwei Werte, die mittels der Funktionsblöcke 39, 40 vom Typ "Ausgang" in der grafischen Darstellung 30 wiedergegeben werden. Die Hauptfunktion 21 entspricht der folgenden mathematischen Beziehung:

$$\begin{pmatrix} f_{H,1} \\ f_{H,2} \end{pmatrix} = \begin{pmatrix} f_1 \\ \min(f_1, f_2) \end{pmatrix}$$

Im Falle des vorliegenden Ausführungsbeispiels kann die mathematische Beziehung "min" durch einen Funktionsblock 50 vom Typ "Minimum" in der Simulationsumgebung simuliert werden. Aufgrund der mathematischen Beziehungen der Hauptfunktion 21 ergeben sich auch die Verbindungen zwischen den Funktionshüllen 31, 32 und den Funktionsblöcken 39, 40, 50.

Im Falle des vorliegenden Ausführungsbeispiels sind für alle mathematischen Beziehungen entsprechende Algorithmen im Simulationsprogramm bzw. Funktionsblöcke in der grafischen Simulationsumgebung vorhanden. Ist dies nicht der Fall, dann werden im Falle des vorliegenden Ausführungsbeispiels mathematische Beziehungen als Restcodes im Simulationsprogramm hinterlegt.

**Patentansprüche**

1.  Verfahren zum Erstellen eines Rechnersimulationsmodells einer zu simulierenden Funktionalität, aufweisend folgende Verfahrensschritte:

    - Bereitstellen eines einer Funktionalität einer Steuerung zugeordneten Rechenprogrammcodes (20),

    - Unterteilen des Rechenprogrammcodes (20) in einzelne, die Funktionalität der Steuerung beschreibende Funktionen (21-23),
    - Gliedern der Funktionen (21-23) derart, so dass ein aufruf-hierarchischer Aufrufplan der einzelnen Funktionen (21-23) entsteht,
    - Nachbilden des aufruf-hierarchischen Ablaufplans in einem den Funktionen zugeordneten Funktionshüllen (31, 32) aufweisenden Modell,
    - Übersetzen von den Funktionen (21-23) des aufruf-hierarchischen Aufrufplans zugeordneten Algorithmen in entsprechende Algorithmen des Rechensimulationsprogramms und
    - Zuordnen der Algorithmen des Simulationsprogramms zu den Funktionshüllen (31, 32).

2.  Verfahren nach Anspruch 1, **gekennzeichnet durch** Ermitteln derjenigen Funktionen (21-23) des Rechenprogrammcodes (20), deren zugeordnete Algorithmen direkt in der grafischen Simulationsumgebung des Rechensimulationsprogramms darstellbar sind.

3.  Verfahren nach Anspruch 2, **gekennzeichnet durch** Übersetzen der Algorithmen des Rechenprogrammcodes (20), die im Rechensimulationsprogramm darstellbar sind, in entsprechende Algorithmen des Rechensimulationsprogramms.

4.  Verfahren nach Anspruch 2 oder 3 **gekennzeichnet durch** Erzeugen von den Algorithmen des Rechenprogrammcodes (20), die im Rechensimulationsprogramm darstellbar sind, entsprechenden grafischen Darstellungen (41, 42, 46, 50) im grafischen Rechnersimulationsmodells (30).

5.  Verfahren nach einem der Ansprüche 2 bis 4, **dadurch gekennzeichnet, dass** ein Wörterbuch (4) verwendet wird, mittels dessen einzelne mathematische Ausdrücke, Codemuster mit spezifischen Platzhaltern und/oder ganze Algorithmen von der Syntax des Rechenprogrammcodes (20) in die Syntax des Rechensimulationsprogramms übersetzt wird.

6.  Verfahren nach einem der Ansprüche 2 bis 5, **gekennzeichnet durch** Ablegen der Algorithmen des Rechenprogrammcodes, die im Rechensimulationsprogramm nicht darstellbar sind, als Restcode im Rechensimulationsprogramm.

7.  Computerprogrammprodukt, das direkt in den internen Speicher (3) eines digitalen Computers (1) geladen werden kann und Softwarecodeabschnitte umfasst, mit denen die Verfahrensschritte gemäß einem der Ansprüche 1 bis 6 ausgeführt werden, wenn das Produkt auf einem Computer (1) läuft.

FIG. 1

21

```
[Result1,Result2] = my_function(Param1,Param2,Param3)

{                   22
    Result1 = first_function(Param1,Param2);

    Result2 = min(Result1, second_function(Param2,Param3));

                    22
    [Result1] = first_function(Param1,Param2)

    {

        Result1 = log10(Param1)*Param2;

    }               23
    [Result1] = second_function(Param1,Param2)

    {

        Result1 = Param1+Param2;

    }

}
```

20

# FIG. 2

FIG. 3

FIG. 4

**Europäisches Patentamt**

# EUROPÄISCHER RECHERCHENBERICHT

Nummer der Anmeldung

EP 08 00 4196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZIEGENBEIN D ET AL: "AutoMoDe - Model-Based Development of Automotive Software" DESIGN, AUTOMATION AND TEST IN EUROPE, 2005. PROCEEDINGS MUNICH, GERMANY 07-11 MARCH 2005, PISCATAWAY, NJ, USA,IEEE, 7. März 2005 (2005-03-07), Seiten 171-177, XP010780261 ISBN: 978-0-7695-2288-3 * Kapitel 4 "Transformations" * * Seite 1 * | 1,7 | INV. G06F9/44 ADD. G06F17/50 |
| A | JUNICHI KAKO ET AL: "Efficient Engine Development Using Model Based Development (MBD)" CONTROL CONFERENCE, 2007. CCC 2007. CHINESE, IEEE, PI, 1. Juli 2006 (2006-07-01), Seiten 603-607, XP031145439 ISBN: 978-7-81124-055-9 * das ganze Dokument * | 1,7 | |
| A | MANFRED BROY ET AL: "Modulare hierarchische Modellierung als Grundlage der Softwareund Systementwicklung" INFORMATIK-SPEKTRUM ; ORGAN DER GESELLSCHAFT FÜR INFORMATIK E.V.UND MIT IHR ASSOZIIERTER ORGANISATIONEN, SPRINGER-VERLAG, BE, Bd. 30, Nr. 1, 10. Januar 2007 (2007-01-10), Seiten 3-18, XP019473040 ISSN: 1432-122X * das ganze Dokument * -/-- | 1,7 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 16. Juli 2008 | Wellisch, J |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
   Dokument

EPO FORM 1503 03.82 (P04C03)

**Europäisches Patentamt**

# EUROPÄISCHER RECHERCHENBERICHT

Nummer der Anmeldung

EP 08 00 4196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HUSELIUS JOEL ET AL: "Evaluating the quality of models extracted from embedded real-time software" PROC INT SYMP WORKSHOP ENG COMPUTER BASED SYST; PROCEEDINGS OF THE INTERNATIONAL SYMPOSIUM AND WORKSHOP ON ENGINEERING OF COMPUTER BASED SYSTEMS; PROCEEDINGS - 14TH ANNUAL IEEE INTERNATIONAL CONFERENCE AND WORKSHOPS ON THE ENGINEERING OF COMPUTER-BAS, 2007, Seiten 577-585, XP031073991 * das ganze Dokument * ----- | 1,7 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 16. Juli 2008 | Wellisch, J |

EPO FORM 1503 03.82 (P04C03)